Europäisches Patentamt

European Patent Office

Office européen des brevets

(11) Publication number: **0 087 866**
**A1**

# (12) EUROPEAN PATENT APPLICATION

(21) Application number: 83300639.8

(22) Date of filing: 09.02.83

(51) Int. Cl.³: **A 22 C 17/00**
**A 47 B 13/08**

(30) Priority: 25.02.82 GB 8205549

(43) Date of publication of application:
07.09.83 Bulletin 83/36

(84) Designated Contracting States:
AT BE CH DE FR IT LI LU NL SE

(71) Applicant: SMC Packaging Limited
Brook House Unit D 1/2/3 Stafford Park 15
Telford, TF3 3BB(GB)

(72) Inventor: Seymour, Brian Edward Hyde
13 Draycott
Hollingswood Telford Shropshire(GB)

(74) Representative: Russell, Paul Sidney et al,
Barker, Brettell & Duncan 138 Hagley Road Edgbaston
Birmingham B16 9PW(GB)

(54) Butcher's blocks.

(57) A butcher's block (10) in the form of a rectangular slab is mounted as a table top on supporting structure (12-20, 30). The block is rotatably supported by upright block-supporting arms (24) which are pivotally mounted on the supporting structure (30), enabling the block to be swung in a direction transversely of its rotational axis on the arms. So swinging the block from a working position moves it off a fixed bearer (14) of the supporting structure and, by means of links (32) extending between the block-supporting arms (24) and pivotally mounted bearer-supporting arms (18), causes a movable bearer (12) to be moved away from the block to permit free rotation of the block for cleaning or turning over. The block can be of high density polyethylene.

FIG 1

EP 0 087 866 A1

## BUTCHER'S BLOCKS

It is well known in butchery for a large wooden chopping block to be used. Such a block is usually of a substantial size and weight, in order to be sufficiently stable in use.

In the interests of hygiene, such a chopping block must be cleaned frequently. Handling the heavy block, during cleaning and at other times, is laborious.

The invention provides, in one of its aspects, apparatus comprising a rotatably mounted block suitable for use as a butcher's chopping block, the apparatus comprising retaining means whereby the block can be retained for use in at least one rotational position.

In this way, a supported block is provided which can be handled easily to ease cleaning.

The apparatus may be in the form of a food preparation table, the block providing the table-top. The block is preferably of a plastics material, for example a high density polyethylene, rather than of wood. In one convenient form, the block is in the form of a slab which can be retained for use in either of two positions of rotational adjustment 180° apart, the block comprising two generally parallel working surfaces which are presented for use respectively in the two positions of adjustment.

Preferably the block can be retained for use by the retaining means in either or any one of at least two rotational positions, in each of which a different face of the block is presented for use.

In a preferred construction, the block is arranged to be moved in a direction transversely of the rotational axis, from a working position to an adjusting position, to move the block clear of fixed means of the retaining means to allow the block to be rotationally adjusted. In one convenient construction the retaining means comprises both fixed means and movable means, and the arrangement is such that upon movement of the block from its working position to its adjusting position the movable means is moved clear of the block to allow the block to be rotated.

In a preferred arrangement the block is rotatably mounted on pivotally mounted block-supporting means whereby the block can be swung between its working and adjusting positions. The retaining means can comprise pivotally mounted movable means coupled to the block-supporting means to be moved thereby clear of the block. Preferably, the rotational axis of the block lies generally above the pivot axis of the block-supporting means and the weight of the block applies opposite turning moments to the block-supporting means in each of the working and adjusting positions of the block; in this way it can be provided that the block-supporting means moves positively to each of its positions corresponding with the working and adjusting positions of the block.

Preferably, the block-supporting means comprises a pair of pivotally mounted arms which are pivotally secured to opposite ends of the block. The retaining means can comprise fixed and movable bearers of supporting structure, which in the working position of the block support the block from beneath. The block-supporting arms are preferably coupled by links to pivotally mounted arms on which the movable bearer is mounted, in order that the bearer will be swung clear of the block when the block-supporting arms move to their positions corresponding with the adjusting position of the block.

There now follows a detailed description, to be read with reference to the accompanying drawings, of a food preparation table which illustrates the invention by way of example.

In the accompanying drawings:

Figure 1 is an end view, partly in section, of the table; and

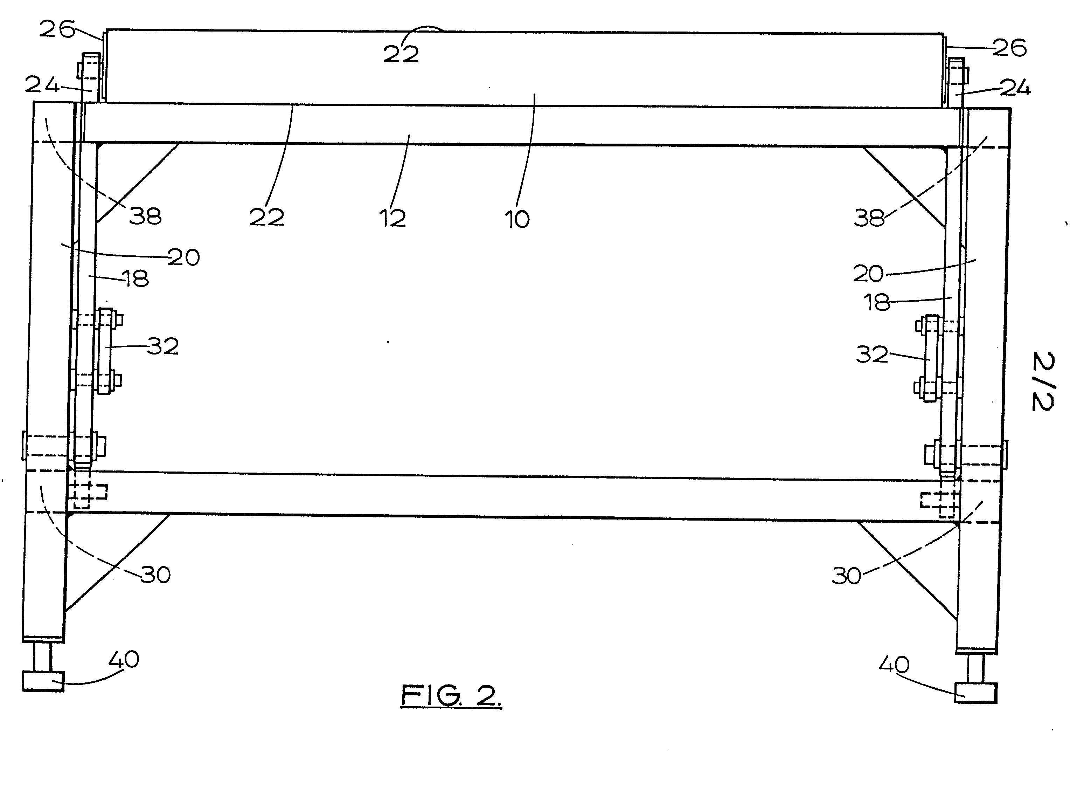

Figure 2 is a front view of the table, in the direction of the arrow 'A' in Figure 1.

The table comprises supporting structure on which is mounted a block 10, in the form of a slab, providing a horizontal flat work-top of the table. The block 10 is suitable for use as a chopping block in butchery and other food preparation and is of a high density polyethylene plastics material. In normal use of the table, the block rests on, and is supported by, front and rear bearers 12 and 14 of the supporting structure; the bearers extend longitudinally of the table, beneath the block 10, adjacent front and rear edges, respectively, of the block.

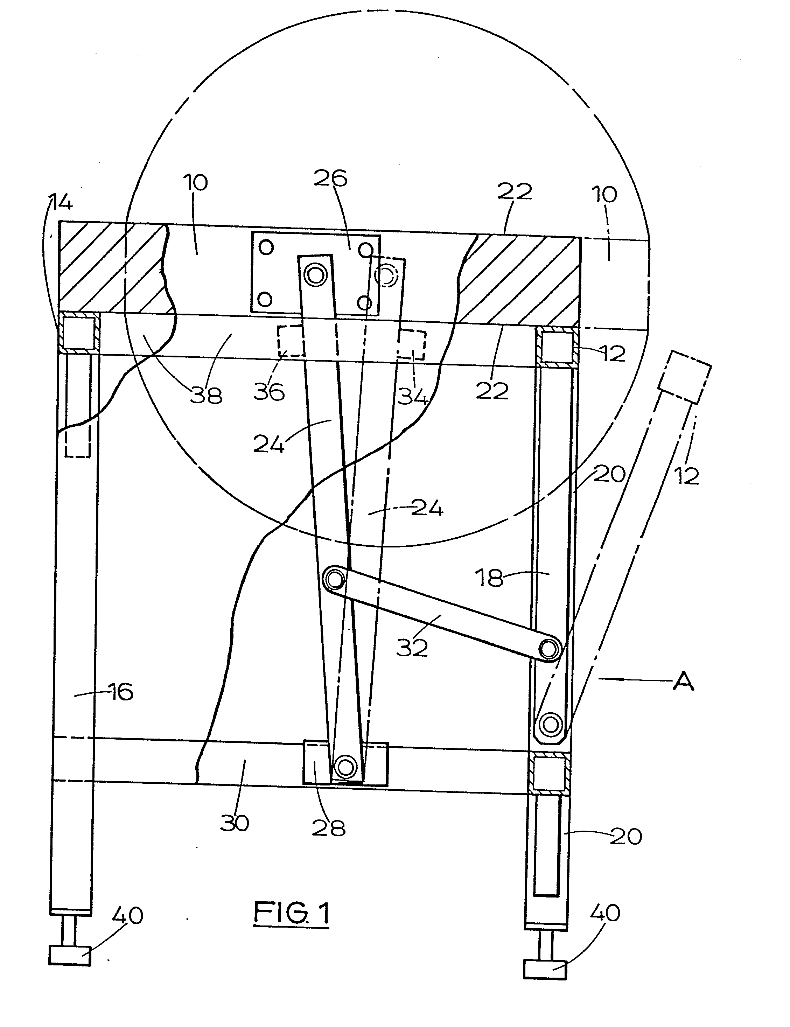

The rear bearer 14 is a fixed bearer of the supporting structure, being welded at each end to rear legs 16 of the table. The front bearer 12 is a movable bearer of the structure, being welded to the upper ends of two depending arms 18 which are pivotally mounted, adjacent their lower ends, on front legs 20 of the table, the arms 18 being mounted to the inside of the legs; the pivotally mounted unit comprising the front bearer 12 and the two arms 18 can be moved from a position shown in full line in Figure 1, supporting the block 10, to a position which is indicated in broken line and in which the bearer 12 is well clear of the block.

The block 10 is itself pivotally mounted for rotation about a horizontal central axis of the block extending longitudinally of the table. This enables either of two flat, parallel, working surfaces 22 of the block to be presented as the worksurface of the table; retaining means whereby the block can be retained for use in either of its two positions of rotational adjustment (180° apart) comprises the bearers 12 and 14. To enable the block to be moved clear of the fixed rear bearer 14, to allow it to be rotationally adjusted, the block is mounted in a manner which allows it to be moved in a direction forwardly of the table from a working position (shown in full line in Figure 1) to an adjusting position (indicated in broken line). To that end, the block is mounted on supporting means comprising two swing arms 24 which extend between pivot plates 26 secured to end faces of the block and pivot brackets 28 mounted on lower braces 30 of the supporting structure of the table; each brace 30 extends between the front leg 20 and the rear leg 16 at one end of the table. Each of the pivot plates 26 and the pivot brackets 28 provides a pivot pin on which the associated swing arm is pivotally mounted. By swinging the swing arms 24 forwardly, about the pivot pins of the brackets 28, the block 10 can be swung forwards to its adjusting position. In order that the movable bearer 12 be automatically moved clear of the block 10 upon so swinging the swing arms, two links 32 couple the swing arms 24 with the arms 18 depending from the bearer 12; the links 32 are pivotally connected to the arms at points above the pivot axes of the arms.

Front and rear stops 34 and 36 are secured to upper braces 38 of the supporting structure to limit the movements of the swing arms 24. Most importantly, the front stops 34 limit the forward movement of the swing arms, the arms 24 resting on the stops 34 when the block is in its adjusting position.

Whilst the pivot plates 26 are connected centrally of the end faces of the block 10, the pivot brackets 28 are secured to the lower braces 30 at positions somewhat forwardly of the mid-points of the braces. As a consequence, the pivot axis of the block 10 is, in the working position of the block, a little rearwardly of a common pivot axis of the two swing arms 24 and the weight of the block applies an anti-clockwise turning moment (as viewed in Figure 1) to the swing arms 24. The front stops 34 are so positioned that when the block is in its adjusting position the pivot axis of the block is a little forwardly of the common pivot axis of the swing arms, and the weight of the block applies a clockwise turning moment to the swing arms 24. In this way it is ensured that the arms rest securely against the stops when the block is in its adjusting position for cleaning or rotational adjustment.

The legs 16 and 20 of the structure stand on adjustable feet 40 which can enable the table to be levelled on an unlevel or uneven floor.

The use of the swing arms 24 provides a simple and convenient manner of mounting the pivotally mounted block to enable it to be moved between its working and adjusting positions. However, it will be appreciated that in other embodiments of the invention other arrangements to allow for such movement could be employed.

To allow for thinning of the block 10 upon re-planing, there can be provision for adjusting the effective length of the swing arms 24, for example at the brackets 28.

0087866

## CLAIMS

1. Apparatus comprising a rotatably mounted block (10) suitable for use as a butcher's chopping block, the apparatus comprising retaining means (12,14) whereby the block can be retained for use in at least one rotational position.

2. Apparatus according to claim 1 wherein the block (10) can be retained for use by said retaining means (12,14) in either or any one of at least two rotational positions, in each of which a different face (22) of the block is presented for use.

3. Apparatus according to claim 2 in which the block is in the form of a slab which can be retained for use in either of two rotational positions which are 180° apart.

4. Apparatus according to any one of claims 1,2 and 3 in which the block (10) is of a high density polyethylene plastics material.

5. Apparatus according to any one of claims 1 to 4 in which the rotatably mounted block (10) is arranged to be moved in a direction transversely of the rotational axis, from a working position to an adjusting position, to move the block clear of fixed means (14) of the retaining means to allow the block to be rotated.

6. Apparatus according to claim 5 in which the retaining means comprises also movable means (12,18) which upon movement of the block (10) from its working position to its adjusting position is moved clear of the block to allow the block to be rotated.

7. Apparatus according to either of claims 4 and 5 in which the block (10) is rotatably mounted on pivotally mounted block-supporting means (24) whereby the block can be swung between its working and adjusting positions.

8. Apparatus according to claim 7 in which said retaining means comprises pivotally mounted movable means (12,18) coupled to said block-supporting means (24) to be moved thereby clear of the block (10) to allow rotation of the block.

9. Apparatus according to either of claims 7 and 8 in which the rotational axis of the block (10) lies generally above the pivot axis of said block-supporting means (24) and the weight of the block applies opposite turning moments to the block-supporting means (24) in each of the working and adjusting positions of the block.

FIG.1

FIG. 2.

European Patent Office

**EUROPEAN SEARCH REPORT**

**0087866**
Application number

EP 83 30 0639

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-C- 12 051 (MESTERN)<br><br>* Whole document * | 1-3,7,8 | A 22 C 17/00<br>A 47 B 13/08 |
| A | FR-A-2 242 933 (PATAY)<br>* Page 2, lines 7-8; claim 3 * | 4 | |
| P,A | EP-A-0 068 447 (KYBURZ)<br>* Page 7, lines 15-17; page 9, line 20 - page 10, line 2; claim 13 * | 1,4 | |
| A | CH-A- 411 260 (BERNEGGER)<br>* Page 1, line 40 - page 2, line 18 * | 5 | |
| A | US-A-2 199 917 (JANES) | | **TECHNICAL FIELDS SEARCHED (Int. Cl. ³)** |
| A | GB-A-1 209 300 (HETTICH & WALLS) | | A 22 C<br>A 47 B<br>B 25 H |
| A | DE-A-2 060 999 (EBNER) | | |
| A | GB-A- 724 053 (WATSON) | | |

The present search report has been drawn up for all claims

| Place of search | Date of completion of the search | Examiner |
|---|---|---|
| THE HAGUE | 30-05-1983 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82